# EUROPÄISCHE PATENTSCHRIFT

(11) **EP 0 889 006 B1**
(45) Veröffentlichungstag und Bekanntmachung des Hinweises auf die Patenterteilung: **05.12.2001**
(21) Anmeldenummer: 98108769.5
(22) Anmeldetag: 14.05.1998
(51) Int. Cl.: C01G 41/02, C22B 34/36

(54) **Verfahren zur Rückgewinnung von dotiertem Wolfram**
Process for the recuparation of doped tungsten
Procédé de récupération du tunstène dopé

(30) Priorität: 03.07.1997 DE 19728490
(43) Veröffentlichungstag der Anmeldung: 07.01.1999
(73) Patentinhaber: Patent-Treuhand-Gesellschaft für elektrische Glühlampen mbH, 81543 München (DE)
(72) Erfinder: Gahn, Alfred, Dr., 86343 Königsbrunn (DE)

(56) Entgegenhaltungen:
- EP-A- 0 204 564
- DE-A- 4 127 567
- DE-C- 372 072
- FR-A- 1 193 521
- US-A- 1 800 758

## Beschreibung

### Technisches Gebiet

Die Erfindung geht aus von einem Verfahren zur Rückgewinnung von dotiertem Wolfram gemäß dem Oberbegriff des Anspruchs 1. Es handelt sich bei den Wolfram enthaltenden Gegenständen insbesondere um Wolframwerkstoffe aus der Lampenherstellung. Häufig wird dabei Thoriumoxid als Dotierstoff verwendet. Aber auch Oxide des Lanthan, Zirkon oder der Seltenerdmetalle werden als Dotierstoffe eingesetzt.

### Stand der Technik

Bisherige Methoden der Wolfram-Rückgewinnung erzielen die Abtrennung des Wolfram ausschließlich auf naßchemischem Weg nach vorausgegangener Oxidation des Wolframs und/oder des wolframhaltigen Materials.

FR 1 193 521 zeigt ein Verfahren mittels chemischen Gasphasentransports zum Aufschluss eines Erzes oder zur Rückgewinnung von Wolfram aus Wolframat (Verhältnis W:O = 1:4) oder aus Carbid anstelle des bis dahin verwendeten HCl-Aufschlusses.

EP 204 564 beschreibt ein Verfahren zur Abtrennung von Wolfram von Kontaminationen, wobei die Reaktion mit Sauerstoff (Oxidation und Sublimation) an Luft oder mit reinem Sauerstoff erfolgt.

DE 372 072 beschreibt ausschließlich den abschließenden Verfahrensschritt der Herstellung von Wolframbronzen, also die Reduktion des Wolframoxids.

Aus der US-A 4 961 910 ist bereits ein Rückgewinnungsverfahren für Wolfram oder Molybdän bekannt, das Schwefel- oder Chlorwasserstoffsäure zum Aufschließen des Wolfram enthaltenden Werkstoffs verwendet. Die Oxidation erfolgt an Luft. Die Abtrennung des Wolfram erfolgt mittels einer Ammoniumhydroxidlösung. Aus der DE-OS 44 25 045 ist ein ähnliches Verfahren bekannt, bei dem Wolfram von anderen Übergangsmetallen getrennt wird unter Verwendung von Chlorwasserstoffsäure. Die US-A 4 784 687 verwendet eine Lösung von Wasserstoffperoxid.

Der Nachteil dieser naßchemischen Verfahren ist, daß der Einsatz ätzender und umweltschädlicher Chemikalien erforderlich ist. Außerdem sind naßchemische Verfahren kostspielig, energieintensiv und arbeitsintensiv.

### Darstellung der Erfindung

Es ist Aufgabe der vorliegenden Erfindung, ein Rückgewinnungsverfahren für Wolfram gemäß dem Oberbegriff des Anspruchs 1 anzugeben, das die oben genannten Nachteile vermeidet.

Diese Aufgabe wird durch die kennzeichnenden Merkmale des Anspruchs 1 gelöst. Besonders vorteilhafte Ausgestaltungen finden sich in den abhängigen Ansprüchen.

Das erfindungsgemäße Verfahren verzichtet auf ein naßchemisches Verfahren zugunsten eines chemischen Gasphasentransports. Der besondere Vorteil daran ist, daß dies eine einfache Möglichkeit eröffnet, etwaige oxidische Dotiersubstanzen, insbesondere ThO₂, La₂O₃, ZrO₂, und/oder Seltenerdmetalloxide, aus Wolframwerkstoffen abzutrennen. Dabei wird reines Wolfram und/oder Wolframoxid gewonnen. Als Wolframwerkstoff wird hier Wolfram, oder ein wolframhaltiges Hartmetall (beispielsweise eine Wolfram-Kobalt-Legierung) verstanden.

Die Erfindung verwendet zur Rückgewinnung einen chemischen Gasphasentransport. Dabei wird zuerst der Werkstoff aus dotiertem, insbesondere thoriertem Wolfram zu einem Granulat mit einer Korngröße von 0,1 - 1 mm zerkleinert. Der Wolframwerkstoff wird z.B. aus Elektrodenabfällen bei der Lampenherstellung erhalten, oder aus Schweißelektrodenabfällen, Spänen oder fertigungsbedingten Abfällen.

Das Granulat wird vorteilhaft vor dem Erhitzen mit einem inerten Zuschlagstoff, z.B. Aluminiumoxid (Korngröße 0,1 -1 mm, 30 - 130 Vol.-%) vermengt, um ein Versintern zu verhindern. Bei eher grober Körnung (Korngröße annähernd 1 mm) kann auf den Zuschlagstoff auch verzichtet werden.

Dann wird das Granulat in ein als Reaktor wirkendes Keramikrohr, insbesondere ein Aluminiumoxidrohr, eingebracht, in dem es in Schutzgas auf eine Reaktionstemperatur 1300 1500 °C erhitzt wird.

Das Schutzgas, beispielsweise Stickstoff oder Argon, wird sukzessive durch Wasserdampf und/oder feuchte Luft (Taupunkt 40 - 80 °C) ersetzt, indem die Durchflußmenge an Schutzgas nach Erreichen der Reaktionstemperatur verringert und durch Wasserdampf und/oder befeuchtete Luft oder befeuchtetem Sauerstoff ersetzt wird.

In einer stark exothermen Reaktion entstehen dabei oxidische Wolframverbindungen, beispielsweise gasförmiges WO₂(OH)₂, H₂WO₄ und ähnliche Verbindungen, die sich als gelblicher Niederschlag im kühlen Reaktorteil niederschlagen. Die Weiterverarbeitung dieser oxidischen Wolframverbindungen erfolgt nicht in an sich bekannter Weise mit einer Ammoniumhydroxidlösung, sondern direkt im Reaktionsrohr durch Reduktion zu Wolframpulver mittels einer Wasserstoffatmosphäre im Überschuß bei einer Temperatur von ca. 900 bis 1100 °C.

Bei geeigneter Anordnung ist kein weiteres Beheizen des Reaktionsgutes erforderlich. Die oxidischen Dotierzusätze reagieren nicht, da sie unter den oben genannten Reaktionsbedingungen nicht flüchtig sind. Sie bleiben daher in der heißen Reaktionszone zurück.

Auf gleiche Weise kann Wolfram aus Hartmetallen, z.B. Schneidplatten etc., gewonnen werden, wobei die Vorbereitung des Wolframmaterials gleichermaßen nach dem für Wolfram beschriebenen Verfahren erfolgen kann.

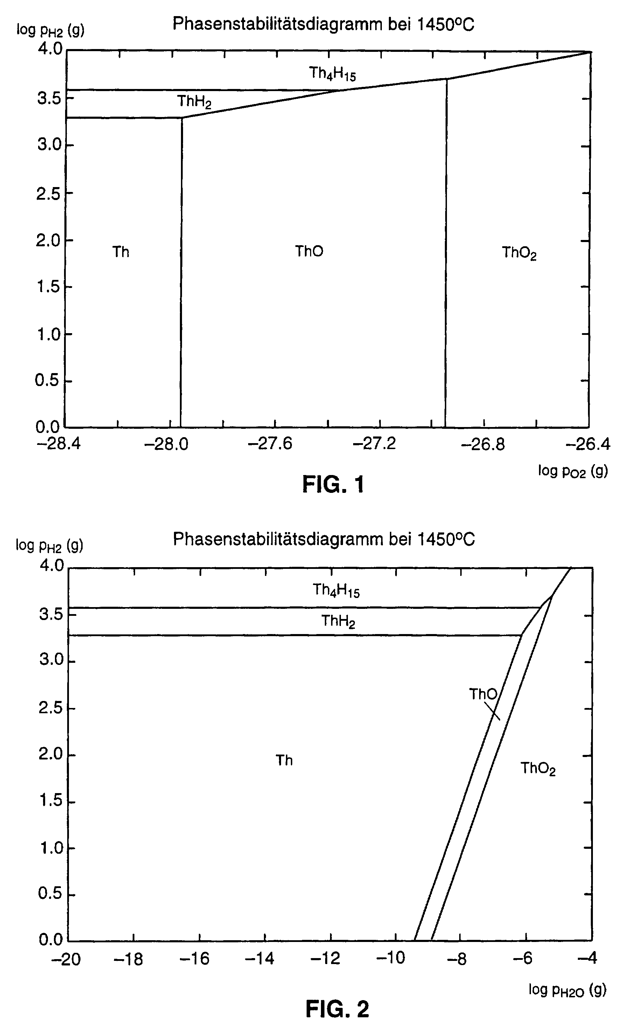

## Patentansprüche

1. Verfahren zur Rückgewinnung des Wolframmetallgehalts aus Wolfram enthaltenden Werkstoffen, wobei das Wolfram als reines Wolfram oder als ein wolframhaltiges Hartmetall vorliegt, wobei die Rückgewinnung mit Hilfe eines chemischen Gasphasentransports erfolgt, wobei der Wolfram enthaltende Werkstoff zusätzlich oxidische Dotiersubstanzen enthält, mit folgenden Verfahrensschritte
a) Zerkleinern des Wolfram enthaltenden Werkstoffs auf eine mittlere Korngröße von etwa 0,1 bis 1 mm;
b) Erhitzen des Granulats;
c) Oxidation des Wolfram enthaltenden Materials mittels Wasserdampf;
d) Reduzieren der oxidierten Wolframverbidnung in einer Wasserstoffatmosphäre bei einer Temperatur von 900 bis 1100 °C;
• **gekennzeichnet durch** folgende Verfahrensschritte:
• in Schritt b): Erhitzen des Granulats auf eine Temperatur von etwa 1300 bis 1500°C in einer Schutzgasatmosphäre;
• in Schritt c): sukzessives Ersetzen des Schutzgases **durch** Wasserdampf (pur oder als befeuchte Luft oder befeuchteter Sauerstoff), wodurch die Oxidation des Wolfram enthaltenden Materials zu oxidischen Wolframverbindungen vom Typ Wolframhydroxyoxide erzielt wird, und anschließendes Abtrennen der Wolframhydroxyoxide als gasförmige Verbindungen.

2. Verfahren nach Anspruch 1, **dadurch gekennzeichnet, dass** als Schutzgas ein Inertgas, insbesondere Stickstoff oder Argon, verwendet wird.

3. Verfahren nach Anspruch 1, **dadurch gekennzeichnet, dass** das Erhitzen in einem Reaktor, insbesondere einem Aluminiumoxidrohr, stattfindet.

4. Verfahren nach Anspruch 1, **dadurch gekennzeichnet, dass** für das Ersetzen des Schutzgases feuchte Luft mit einem Taupunkt von 40 bis 80 °C verwendet wird.

5. Verfahren nach Anspruch 3, **dadurch gekennzeichnet, dass** das Granulat vor dem Erhitzen mit einem inerten Zuschlagstoff, insbesondere Aluminiumoxid, vermengt wird.

6. Verfahren nach Anspruch 1, **dadurch gekennzeichnet, dass** die oxidischen Dotierstoffe ein Oxid mindestens eines der folgenden Metalle umfassen: Thorium, Zirkon, Lanthan, Seltenerdmetall

## Claims

1. Process for recovering the tungsten metal content from tungsten-containing materials, the tungsten being in the form of pure tungsten or in the form of a tungsten-containing hard metal, the recovery being carried out with the aid of a chemical vapour phase transfer, the tungsten-containing material additionally containing oxidic doping substances, comprising the following process steps
a) comminution of the tungsten-containing material to a mean grain size of approximately 0.1 to 1 mm;
b) heating of the granules;
c) oxidation of the tungsten-containing material by means of steam;
d) reduction of the oxidized tungsten compound in a hydrogen atmosphere at a temperature of 900 to 1100°C;
• **characterized by** the following process steps:
• in step b): heating of the granules to a temperature of approximately 1300 to 1500°C in a protective gas atmosphere;
• in step c): gradual replacement of the protective gas by steam (pure or as humidified air or humidified oxygen), with the result that the oxidation of the tungsten-containing material to form oxidic tungsten compounds of the tungsten hydroxide oxide type is brought about, and subsequent separation of the tungsten hydroxide oxides as gaseous compounds.

2. Process according to Claim 1, **characterized in that** the protective gas used is an inert gas, in particular nitrogen or argon.

3. Process according to Claim 1, **characterized in that** the heating takes place in a reactor, in particular in an aluminium oxide tube.

4. Process according to Claim 1, **characterized in that** humid air with a dew point of 40 to 80°C is used to replace the protective gas.

5. Process according to Claim 3, **characterized in that** the granules, before being heated, are mixed with an inert filler, in particular aluminium oxide.

6. Process according to Claim 1, **characterized in that** the oxidic dopants comprise an oxide of at least one of the following metals: thorium, zirconium, lanthanum or a rare-earth element.

## Revendications

1. Procédé de récupération de la teneur en tungstène métallique, de matériau contenant du tungstène, le tungstène se présentant sous forme de tungstène pur ou sous la forme d'un métal dur contenant du tungstène, la récupération s'effectuant au moyen d'un transport chimique en phase gazeuse, le matériau contenant du tungstène, contenant en outre des substances oxydées de dopage, comprenant les stades suivants de procédé
a) fragmentation du matériau contenant du tungstène, jusqu'à une granulométrie moyenne d'environ 0,1 à 1 mm ;
b) chauffage du produit granulé ;
c) oxydation du matériau contenant du tungstène au moyen de vapeur d'eau ;
d) réduction du composé oxydé de tungstène, dans une atmosphère d'hydrogène à une température de 900 à 1100°C ;
• **caractérisé par** les stades suivants du procédé :
• au stade b): chauffage du produit granulé jusqu'à une température d'environ 1300 à 1500°C sous une atmosphère de gaz protecteur ;
• au stade c) : remplacement successif du gaz protecteur par de la vapeur d'eau (pur ou sous forme d'air humidifié ou d'oxygène humidifié), ce qui produit l'oxydation du matériau contenant du tungstène en des composés oxydés du tungstène du type hydroxy-oxyde de tungstène, et ensuite séparation des hydroxy-oxydes de tungstène sous forme de composés gazeux.

2. Procédé suivant la revendication 1, **caractérisé en ce qu'**il consiste à utiliser comme gaz protecteur un gaz inerte, notamment de l'azote ou de l'argon.

3. Procédé suivant la revendication 1, **caractérisé en ce que** le chauffage a lieu dans un réacteur, notamment dans un tube en oxyde d'aluminium.

4. Procédé suivant la revendication 1, **caractérisé en ce qu'**il consiste à utiliser pour remplacer le gaz protecteur de l'air humide, ayant un point de rosée de 40 à 80°C.

5. Procédé suivant la revendication 3, **caractérisé en ce qu'**il consiste à mélanger le produit granulé avant le chauffage, à un additif inerte notamment à de l'oxyde d'aluminium.

6. Procédé suivant la revendication 1, **caractérisé en ce qu'**une substance oxydée de dopage comprenne un oxyde d'au moins l'un des métaux suivants : thorium, zirconium, lanthane, métal de terres rares.
